(19) Europäisches Patentamt / European Patent Office / Office européen des brevets

(11) **EP 4 404 448 A1**

(12) **EUROPEAN PATENT APPLICATION**
published in accordance with Art. 153(4) EPC

(43) Date of publication:
**24.07.2024  Bulletin 2024/30**

(21) Application number: **22869978.1**

(22) Date of filing: **14.09.2022**

(51) International Patent Classification (IPC):
**H02K 55/04** (2006.01)

(52) Cooperative Patent Classification (CPC):
**H02K 55/04;** Y02E 40/60

(86) International application number:
**PCT/JP2022/034304**

(87) International publication number:
**WO 2023/042831 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2021  JP 2021152357**

(71) Applicants:
• **Kabushiki Kaisha Toshiba
  Tokyo 105-0023 (JP)**
• **Toshiba Energy Systems & Solutions
  Corporation
  Saiwai-ku
  Kawasaki-shi
  Kanagawa 2120013 (JP)**

(72) Inventors:
• **FUCHIMOTO, Ryo
  Kawasaki-shi, Kanagawa 212-0013 (JP)**
• **MATSUZAKI, Akihiro
  Kawasaki-shi, Kanagawa 212-0013 (JP)**
• **AOKI, Hironobu
  Kawasaki-shi, Kanagawa 212-0013 (JP)**
• **YANO, Teppei
  Kawasaki-shi, Kanagawa 212-0013 (JP)**

(74) Representative: **Hoffmann Eitle
Patent- und Rechtsanwälte PartmbB
Arabellastraße 30
81925 München (DE)**

(54) **ROTOR FOR SUPERCONDUCTING DYNAMOELECTRIC MACHINE**

(57)     According to one embodiment, there is provided a rotor of a superconducting rotating electrical machine using a superconducting wire as a field winding (5A, 5B). The rotor comprises a plurality of current leads (1) electrically connected to the field winding (5A, 5B) and spirally wound around a rotation center.

FIG. 2

**Description**

FIELD

Embodiments of the present invention relate to a rotor of a superconducting rotating electrical machine.

BACKGROUND

In recent years, a so-called superconducting rotating electrical machine using a superconducting conductor as a field winding has been developed. A rotor of a superconducting rotating electrical machine using a superconducting conductor, for example, a superconducting wire such as a high temperature superconducting wire (HTS), needs to be cooled to a critical temperature or lower in order to maintain superconductivity, and needs to keep a low temperature state during operation and minimize heat entering the superconducting wire.

Intrusion heat is classified into radiant heat transfer, lean gas heat transfer, conductive heat transfer, and the like. Conventionally, in order to suppress these heat transfer, a periphery of a low temperature rotor is formed as a vacuum layer having a small vacuum pressure, and a member (torque tube, current lead, or the like) that mechanically connects a low temperature portion and a normal temperature portion is cooled by a refrigerant of a gas vaporized in the low temperature rotor. That is, the refrigerant vaporized in the low temperature rotor is not simply discharged and recovered, but is recovered while being effectively used as a medium for cooling these members in order to suppress heat entering the low temperature rotor due to heat conduction of a torque tube, a current lead, or the like.

In the conventional technique, for example, a low temperature refrigerant flows through a cooling path inside a current lead to cool the current lead. In order to suppress heat entering the low temperature portion through the current lead, it is common to study a configuration of the cooling path to improve heat exchange performance, increase a cooling length, and reduce a cross-sectional area of the current lead.

In recent years, a superconducting rotating electrical machine using HTS capable of obtaining superconducting characteristics at about 30 K has been developed, and not only liquid helium but also helium gas, liquid hydrogen, hydrogen gas, and the like can be used as a refrigerant.

In addition, since the superconducting rotating electrical machine can generate a high magnetic field with a small coil, a high power density can be realized, and utilization in various fields (for example, ships, aircrafts, trains, power generation fields, industrial fields, and the like) is expected.

In the superconducting rotating electrical machine using the superconducting wire as the field winding, a high power density is required. For example, in a current lead of a type (direct cooling type) in which cooling is performed by directly flowing a refrigerant into the current lead, sealability, thermal insulation, low heat intrusion property, and high heat exchange performance of the refrigerant are required. Therefore, a connection portion requires a complicated structure, and a thin and long conductive pipe needs to be used, which causes an increase in an axial length of the rotor. Furthermore, in a case where a thin and long copper band is used in the inside of the rotating body, rigidity against centrifugal force due to rotation is low, so that a support structure is also required. In addition, a structure (for example, a bellows or the like) having a function of alleviating thermal stress generated by thermal shrinkage at a low temperature is required. As described above, when the direct cooling type current lead is used, the structure of the superconducting rotating electrical machine becomes complicated and the size of the superconducting rotating electrical machine becomes large.

For this reason, it is desired to present a rotor of a superconducting rotating electrical machine capable of shortening the axial length with a simple configuration.

SUMMARY

According to one embodiment, there is provided a rotor of a superconducting rotating electrical machine using a superconducting wire as a field winding. The rotor comprises a plurality of current leads electrically connected to the field winding and spirally wound around a rotation center.

BRIEF DESCRIPTION OF THE DRAWINGS

FIG. 1 is a configuration diagram illustrating an example of a configuration of a rotor of a superconducting rotating electrical machine according to an embodiment.
FIG. 2 is a perspective view illustrating a structure of a part of a peripheral portion of a spiral current lead mounted on the rotor of the superconducting rotating electrical machine illustrated in FIG. 1.

FIG. 3A is a perspective view illustrating an example of a structure in which bolts are attached to current lead insertion members 41A and 41B and holes 32 for casting solder are provided.

FIG. 3B is a cross-sectional view illustrating an example of a cross-sectional shape of the current lead insertion member 41A illustrated in FIG. 3A as viewed in a direction of arrows A-A.

FIG. 4 is a perspective view illustrating an example of a structure for supporting a current lead 1 using cylindrical current lead support members 35A and 35B and a tape material 36.

FIG. 5 is a perspective view illustrating an example of a structure for supporting a current lead 1 using a block-shaped current lead support member 37 and a tape material 36.

FIG. 6 is a conceptual diagram illustrating an arrangement example in a case where there are three pairs of one current lead 1 corresponding to a positive side and one current lead 1 corresponding to a negative side (case where the number of parallel circuits is three).

## DETAILED DESCRIPTION

Hereinafter, embodiments will be described with reference to the drawings.

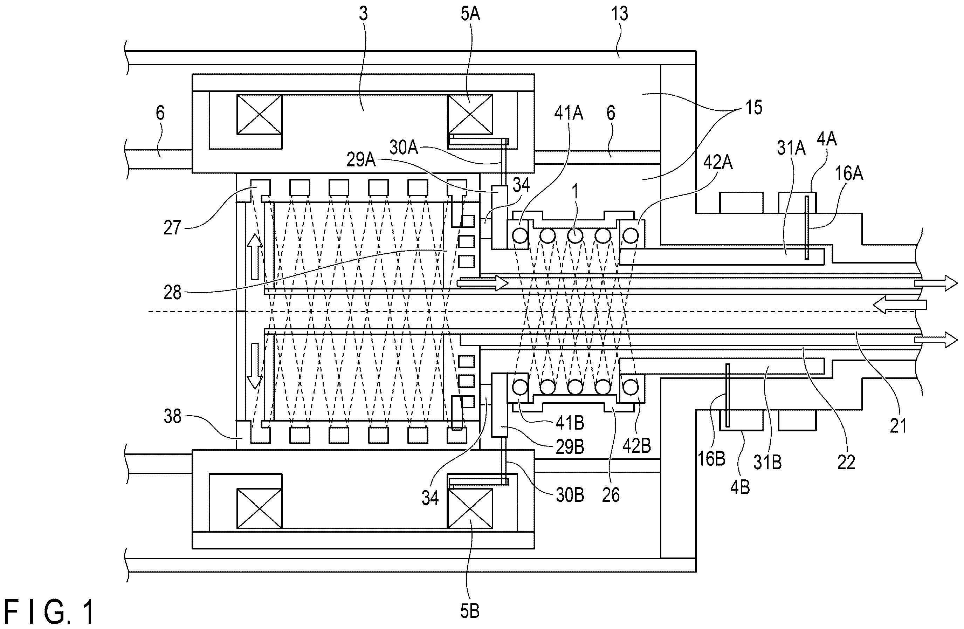

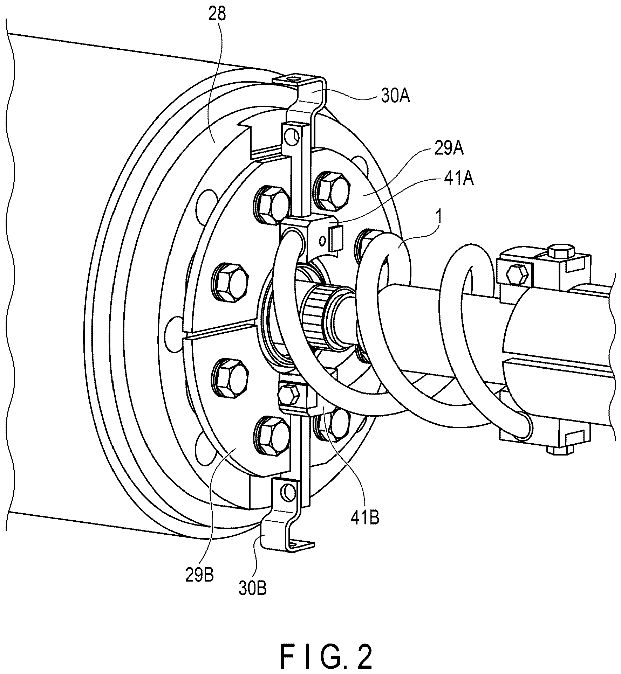

FIG. 1 is a configuration diagram illustrating an example of a configuration of a rotor of a superconducting rotating electrical machine according to an embodiment. FIG. 2 is a perspective view illustrating a structure of a part of a peripheral portion of a spiral current lead mounted on the rotor of the superconducting rotating electrical machine illustrated in FIG. 1.

FIG. 1 illustrates a rotor of a superconducting rotating electrical machine using, for example, a superconducting wire such as a high temperature superconducting wire (HTS) as a field winding, which configures the superconducting rotating electrical machine together with a stator (not illustrated) disposed around the rotor. The rotor of the superconducting rotating electrical machine includes a low temperature portion cooled to a critical temperature or lower in order to maintain superconductivity, and is configured to minimize heat entering the superconducting wire in order to maintain a low temperature state during operation.

Specifically, as illustrated in FIG. 1, the rotor of the superconducting rotating electrical machine includes a current lead 1, a low temperature rotor 3, collector rings 4A and 4B, field windings (superconducting wires) 5A and 5B, a torque tube 6, a normal temperature damper 13, a vacuum insulation space 15, connection copper bands 16A and 16B, a refrigerant supply pipe 21, a refrigerant recovery pipe 22, a current lead support member 26, an indirect cooling spiral groove 27, a low temperature flange 28, flat cooling copper plates 29A and 29B, lead copper bands 30A and 30B, center hole copper bands 31A and 31B, an insulating member 34, a low temperature ring 38, current lead insertion members 41A and 41B, 42A and 42B, and the like. Here, a reference sign with A is attached to an element corresponding to a positive side of a direct current, and a reference sign with B is attached to an element corresponding to a negative side of the direct current.

The current lead 1 and the torque tube 6 that connect a low temperature portion and a normal temperature portion of the rotor in the vacuum insulation space 15 are provided between the low temperature portion and the normal temperature portion. In particular, the current lead 1 of the present embodiment includes a plurality of current leads wound spirally around a rotation center, and has a spiral structure, thereby making it possible to shorten an axial length of the rotor. Here, a case where the number of current leads 1 is two is exemplified, but the present invention is not limited to this example, and the number of current leads 1 may be larger than that in this example.

The current lead 1 includes one current lead corresponding to the positive side of the direct current and one current lead corresponding to the negative side of the direct current, and both are arranged to be separated from each other by 180° in a circumferential direction of the rotor. With the arrangement shifted by 180° in this manner, it is possible to reduce weight imbalance when the rotor rotates as much as possible.

The current lead support member 26 is a cylindrical insulating member that supports each current lead so as to cover the current lead from the periphery, and prevents the current lead from being deformed or vibrated by a centrifugal force when the rotor rotates. However, the current lead support member 26 is not necessarily required. Other members may support the individual current leads.

One end of each of the plurality of current leads 1 is inserted into the conductive current lead insertion member 41A or 41B, and the other end is inserted into the conductive current lead insertion member 42A or 42B. The current lead insertion member 41A is attached to the flat cooling copper plate 29A or formed as a part of the flat cooling copper plate 29A, and the current lead insertion member 41B is attached to the flat cooling copper plate 29B or formed as a part of the flat cooling copper plate 29B.

One end portion of the current lead 1 corresponding to the positive side of the direct current is electrically connected to the field winding 5A through the current lead insertion member 41A, the flat cooling copper plate 29A, and the lead copper band 30A, and is thermally conductively connected to the low temperature portion including the low temperature flange 28 and the low temperature ring 38 through the current lead insertion member 41A, the flat cooling copper plate 29A, and the insulating member 34. The insulating member 34 (for example, aluminum nitride having high thermal conductivity) having thermal conductivity of a certain level or more is interposed between the flat cooling copper plate 29A and the low temperature flange 28, and the low temperature flange 28 can cool the flat cooling copper plate 29A while maintaining insulation between the flat cooling copper plate 29A and the low temperature flange 28. In addition, the other end portion of the current lead 1 corresponding to the positive side of the direct current is electrically connected to the collector ring 4A through the current lead insertion member 42A, the center hole copper band 31A, and the connection copper band 16A. A field current is supplied to the collector ring 4A through a brush.

Similarly, one end of the current lead 1 corresponding to the negative side of the direct current is electrically connected to the field winding 5B through the current lead insertion member 41B, the flat cooling copper plate 29B, and the lead copper band 30B, and is thermally conductively connected to the low temperature portion including the low temperature flange 28 and the low temperature ring 38 through the current lead insertion member 41B, the flat cooling copper plate 29B, and the insulating member 34. The insulating member 34 (for example, aluminum nitride having high thermal conductivity) having thermal conductivity of a certain level or more is interposed between flat cooling copper plate 29B and low temperature flange 28, and the low temperature flange 28 can cool the flat cooling copper plate 29B while maintaining insulation between the flat cooling copper plate 29B and the low temperature flange 28. In addition, the other end portion of the current lead 1 corresponding to the negative side of the direct current is electrically connected to the collector ring 4B through the current lead insertion member 42B, the center hole copper band 31B, and the connection copper band 16B. A field current is supplied to the collector ring 4B through a brush.

In the example of FIG. 1, in order to form each of the current leads 1 into a spiral structure, an example is illustrated in which each of the current leads 1 is wound by two turns from the current lead insertion members 41A and 41B to the current lead insertion members 42A and 42B, but the present invention is not limited to this example. The number of turns may be three or more. In addition, the number of turns may be 2.5 turns, 3.5 turns, or the like. In that case, for example, on the normal temperature portion side, an arrangement place of the members (current lead insertion member 42A, center hole copper band 31A, connection copper band 16A, collector ring 4A) corresponding to the positive side of the direct current and an arrangement place of the members (current lead insertion member 42B, center hole copper band 31B, connection copper band 16B, and collector ring 4B) corresponding to the negative side may be exchanged with each other.

The field windings 5A and 5B, which are superconducting wires, are incorporated in the low temperature rotor 3. The low temperature ring 38 is configured to indirectly cool the low temperature rotor 3. For example, the low temperature ring 38 has a flow path through which refrigerant flows, and includes a spiral indirect cooling spiral groove 27 as a part of the flow path. The refrigerant is supplied to an inside of the low temperature ring 38 through the refrigerant supply pipe 21 as indicated by arrows in FIG. 1. The refrigerant supplied into the low temperature ring 38 is sent to an outer diameter side of the low temperature ring 38, flows from an end of the low temperature ring 38 along the indirect cooling spiral groove 27, goes toward the cooling copper plate 29 while indirectly cooling the low temperature rotor 3, further cools the cooling copper plate 29, and then is recovered through the refrigerant recovery pipe 22.

The current lead 1 having the spiral structure includes, for example, a copper band, and a copper band cross-sectional area and a copper band length can be determined from the following Formula (1) based on the field current, the temperature on the normal temperature portion side (high temperature end temperature), and the temperature on the low temperature portion side (low temperature end temperature) such that the amount of heat intrusion is minimized.

$$L/A = (\lambda / I \sqrt{L_o}) \cos^{-1}(T_L/T_H) \quad \cdots \quad (1)$$

where:

L: copper band length
A: copper band cross-sectional area
$\lambda$: thermal conductivity
I: field current
$L_o$: the number of Lorentz
$T_L$: low temperature end temperature
$T_H$: high temperature end temperature

In the current lead 1, the axial length of the current lead 1 itself can be freely adjusted by adjusting a spiral pitch. Furthermore, since the thermal stress relaxation of the current lead 1 due to thermal contraction at a low temperature is obtained by the spring effect of the spiral structure, a spring force can be adjusted by adjusting the cross-sectional area and the spiral length.

In addition, since the current lead 1 has a copper band having a spiral structure, a hoop resistant rigidity due to the annular structure is increased, and thus the current lead 1 can easily withstand centrifugal force, and the rigidity can be adjusted by adjusting the cross-sectional area and the spiral length.

As a material of the current lead 1, it is easy to suppress intrusion heat by using copper phosphate having a low thermal conductivity among copper bands.

The end portion of the current lead 1 on the low temperature portion side is connected to the flat cooling copper plates 29A and 29B having a large area through the current lead insertion members 41A and 41B, and the flat cooling copper plates 29A and 29B are attached to the low temperature flange 28 through the insulating member 34 made of aluminum nitride having a high thermal conductivity by, for example, bolt fastening. Therefore, the flat cooling copper plates 29A and 29B can be more efficiently cooled by the low temperature flange 28 cooled in the low temperature portion, and the effect of suppressing the heat intrusion from the current lead 1 to the low temperature rotor 3 can be enhanced.

In addition, since the indirect cooling spiral groove 27 configuring a flow path of the refrigerant flowing inside the low temperature ring 38 has a spiral shape, the heat transfer area is large, and the low temperature rotor 3, the low temperature flange 28, and the flat cooling copper plates 29A and 29B can be more efficiently cooled.

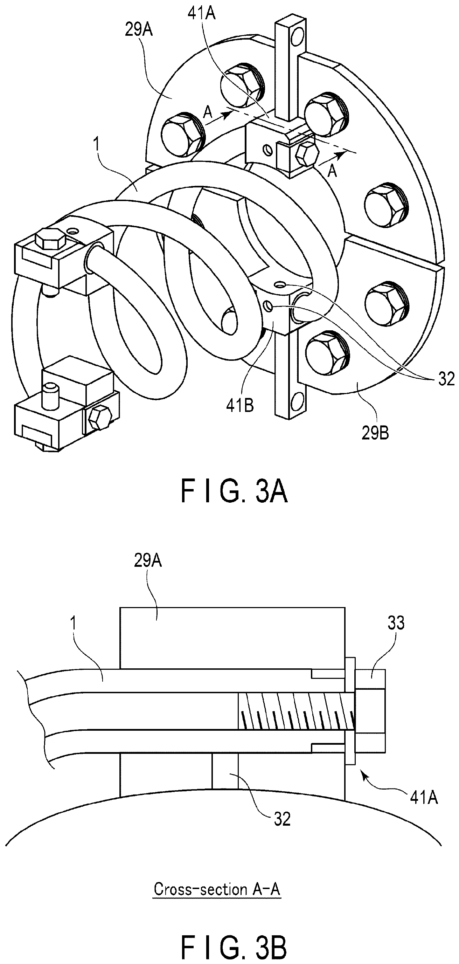

For example, bolt fastening or electron beam welding (EBW) may be applied to the electrical connection between the current lead 1 and the flat cooling copper plates 29A and 29B by the current lead insertion members 41A and 41B. Accordingly, the members are reliably connected to each other. In addition, in order to further ensure the electrical connection, a structure may be adopted in which, in each of the current lead insertion members 41A and 41B, a hole for casting solder is provided in a portion into which one end of the current lead 1 is inserted, and the solder is cast from the hole to be fixed. An example of the structure in this case is illustrated in FIGS. 3A and 3B.

FIG. 3A is a perspective view illustrating an example of a structure in which bolts are attached to current lead insertion members 41A and 41B and holes 32 for casting solder are provided. FIG. 3B is a cross-sectional view illustrating an example of a cross-sectional shape of the current lead insertion member 41A illustrated in FIG. 3A as viewed in a direction of arrows A-A.

As illustrated in FIG. 3A, bolts are attached to the current lead insertion members 41A and 41B, and holes 32 for casting solder are provided.

In addition, as illustrated in FIG. 3B, the current lead insertion member 41A is internally provided with a stepped portion that meshes with an end of the current lead 1 to be inserted, and is provided with a bolt hole for passing the bolt 33. On the other hand, the inside of the current lead 1 is threaded to receive the insertion of the bolt 33.

When the bolt 33 is threaded through the bolt hole of the current lead insertion member 41A to the inside of the current lead 1 and the bolt 33 is turned, the current lead 1 is pulled toward the stepped portion side of the current lead insertion member 41A and tightened. After the bolt fastening has been performed in this manner, the solder is cast from the hole 32 for casting the solder, and the solder is spread throughout the gap. When the solder solidifies, the electrical connection between the current lead 1, the current lead insertion member 41A, and the flat cooling copper plate 29A is secured.

Depending on the spiral pitch and the number of spiral turns, the current lead 1 has low rigidity in a direction perpendicular to the axis unique to the coil spring, so that vibration may increase. In order to prevent the vibration, it is desirable to support the current lead 1 using a support member having the same shape as the current lead support member 26 described above, another tape material, or the like.

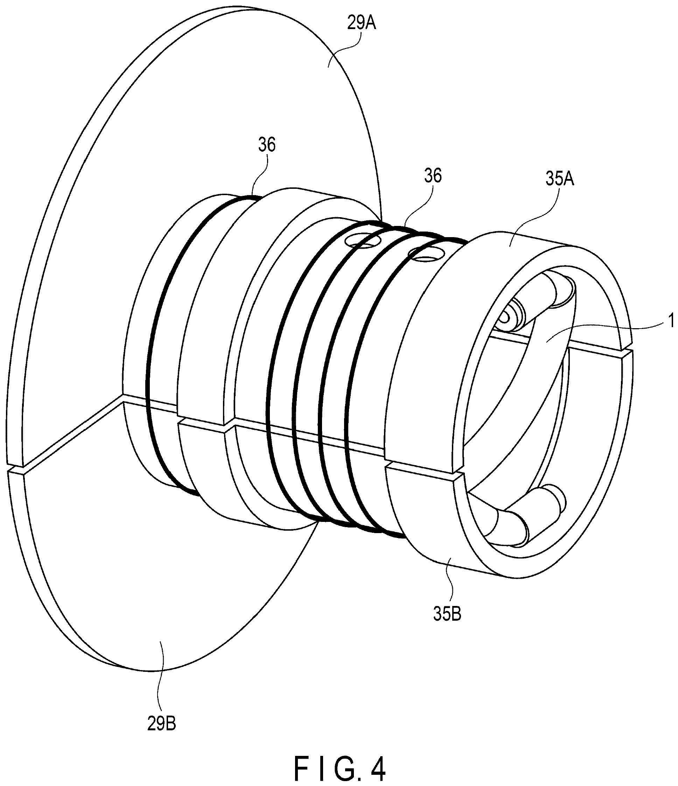

FIG. 4 is a perspective view illustrating an example of a structure for supporting the current lead 1.

The current lead support members 35A and 35B illustrated in FIG. 4 are insulating members that are cylindrical in combination, and support the current lead 1 so as to cover the current lead 1 from the periphery. For example, the current lead support member 35A is fixed to the flat cooling copper plate 29A side, and the current lead support member 35B is fixed to the flat cooling copper plate 29B side. In the cylindrical current lead support members 35A and 35B, there are a plurality of concave depressions (for example, the end portion on the cooling copper plate side and the central portion) for winding the tape material. The insulating tape material 36 is wound and tightened in the recess so that the current lead 1 is firmly supported by the cylindrical current lead support members 35A and 35B. With such a configuration, the rigidity of the spiral current lead 1 can be enhanced, and the vibration suppressing effect can be enhanced.

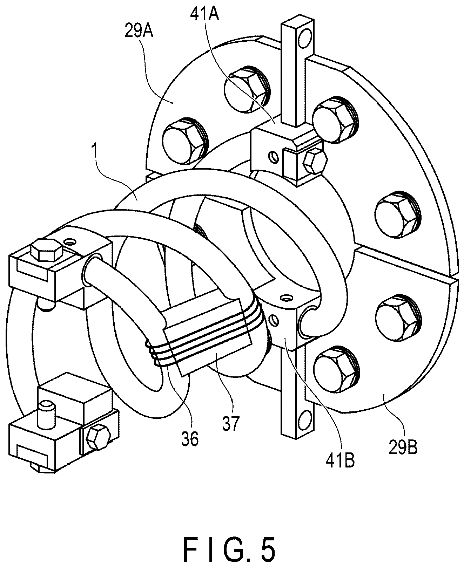

Instead of using the cylindrical current lead support members 35A and 35B and the tape material 36 as shown in FIG. 4, the current lead 1 may be supported using a block-shaped current lead support member 37 and the tape material 36 as shown in FIG. 5. In this case, the block-shaped current lead support member 37 is attached so as to be sandwiched between the current lead 1 corresponding to the positive of the direct current and the current lead 1 corresponding to the negative. The block-shaped current lead support member 37 and the current leads 1 on both sides are wound and tightened with the insulating tape material 36, so that the current leads 1 are firmly supported. With such a configuration as well, the rigidity of the spiral current lead 1 can be enhanced, and the vibration suppressing effect can be enhanced.

In the above description, the case where there is only one pair of one current lead 1 corresponding to the positive side of the direct current and one current lead 1 corresponding to the negative side has been exemplified. However, a plurality of pairs of one current lead 1 corresponding to the positive side of the direct current and one current lead 1 corresponding to the negative side may be provided. That is, a plurality of current leads 1 corresponding to the positive side may be provided to form a parallel circuit, and a plurality of current leads 1 corresponding to the negative side may be provided to form a parallel circuit. In this case, the individual current leads 1 are arranged so as to form a spiral shape while maintaining equal intervals in the circumferential direction of the rotor. When the number of parallel circuits is N, a pitch between adjacent current leads is 360/N/2 (degrees). This arrangement makes it possible to balance the rotation on both the positive side and the negative side.

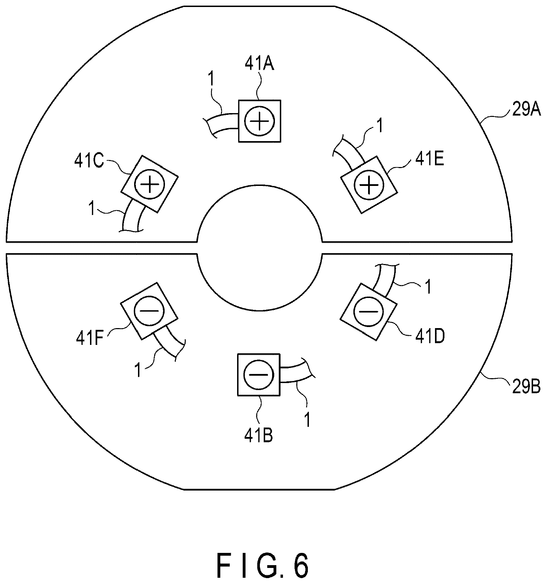

For example, in a case where there are three pairs of one current lead 1 corresponding to the positive side and one current lead 1 corresponding to the negative side (in a case where the number of parallel circuits is 3), as illustrated in FIG. 6, current lead insertion members 41C and 41D and current lead insertion members 41E and 41F are further disposed in the flat cooling copper plates 29A and 29B in addition to the above-described current lead insertion members 41A and 41B, and the current leads 1 extend spirally from each of the current lead insertion members while maintaining equal intervals in the circumferential direction of the rotor. In this case, the pitch between the adjacent current leads is 60 degrees. The current lead 1 extending from each of the current lead insertion members 41A, 41C, and 41E on the flat cooling copper plate 29A side forms a positive-side parallel circuit, and the current lead 1 extending from each of the current lead insertion members 41B, 41D, and 41F on the flat cooling copper plate 29B side forms a negative-side parallel circuit.

With this configuration, the amount of heat generated per current lead can be reduced and heat can be dispersed, so that the effect of suppressing heat entering the low temperature rotor 3 can be enhanced.

As described above in detail, according to the embodiment, a rotor of a superconducting rotating electrical machine capable of shortening the axial length with a simple configuration can be provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims and their equivalents are intended to cover such forms or modifications as would fall within the scope of the inventions.

**Claims**

1. A rotor of a superconducting rotating electrical machine using a superconducting wire as a field winding, the rotor comprising a plurality of current leads electrically connected to the field winding and spirally wound around a rotation center.

2. The rotor of a superconducting rotating electrical machine according to claim 1, wherein one end of each of the plurality of current leads is electrically connected to the field winding through a predetermined member and is thermally conductively connected to a low temperature portion in the rotor.

3. The rotor of a superconducting rotating electrical machine according to claim 1, wherein

   each of the plurality of current leads has one end electrically connected to the field winding through a flat plate member and thermally conductively connected to a low temperature portion in the rotor, and
   an insulating member having thermal conductivity of a certain level or more is interposed between the flat plate member and the low temperature portion.

4. The rotor of a superconducting rotating electrical machine according to any one of claims 1 to 3, wherein

   the plurality of current leads include one current lead corresponding to a positive side of a direct current and one current lead corresponding to a negative side of the direct current, and
   the two current leads are arranged to be shifted from each other by 180° in a circumferential direction of the rotor.

5. The rotor of a superconducting rotating electrical machine according to claim 4, wherein a plurality of pairs of one current lead corresponding to the positive side and one current lead corresponding to the negative side is provided.

6. The rotor of a superconducting rotating electrical machine according to claim 5, wherein the individual current leads are arranged to form a spiral shape while maintaining equal intervals in the circumferential direction of the rotor.

7. The rotor of a superconducting rotating electrical machine according to any one of claims 1 to 6, further comprising a cylindrical insulating member that supports each current lead to cover the current lead from the periphery.

8. The rotor of a superconducting rotating electrical machine according to any one of claims 1 to 7, wherein an insulating member is attached between the current leads.

9. The rotor of a superconducting rotating electrical machine according to claim 3, further comprising a plurality of current lead insertion members attached to the flat plate member and into which one ends of the plurality of current leads are inserted, wherein each of the current lead insertion members includes a hole for casting solder in a portion into which one end of the corresponding current lead is inserted.

10. The rotor of a superconducting rotating electrical machine according to claim 9, wherein bolt fastening or electron beam welding (EBW) is applied to electrical connection between each current lead and the flat plate member by the plurality of current lead insertion members.

F I G. 1

F I G. 2

F I G. 3A

Cross-section A-A

F I G. 3B

29A

36

36

35A

1

29B

35B

F I G. 4

F I G. 5

F I G. 6

<div align="center">

## INTERNATIONAL SEARCH REPORT

</div>

| | International application No. |
|---|---|
| | **PCT/JP2022/034304** |

**A. CLASSIFICATION OF SUBJECT MATTER**

***H02K 55/04***(2006.01)i
FI: H02K55/04

According to International Patent Classification (IPC) or to both national classification and IPC

**B. FIELDS SEARCHED**

Minimum documentation searched (classification system followed by classification symbols)

H02K55/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/038909 A1 (SIEMENS AKTIENGESELLSCHAFT) 27 February 2020 (2020-02-27)<br>p. 22, line 27 to p. 30, line 27, fig. 1-6 | 1-2, 4-6 |
| A | p. 22, line 27 to p. 30, line 27, fig. 1-6 | 3, 7-10 |
| A | JP 2010-93886 A (NIIGATA UNIV) 22 April 2010 (2010-04-22)<br>entire text, all drawings | 1-10 |
| A | JP 57-78361 A (HITACHI SEISAKUSHO KK) 17 May 1982 (1982-05-17)<br>entire text, all drawings | 1-10 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/034304**

| Patent document cited in search report | | | Publication date (day/month/year) | Patent family member(s) | Publication date (day/month/year) |
|---|---|---|---|---|---|
| WO | 2020/038909 | A1 | 27 February 2020 | US 2021/0408888 A1 paragraphs [0066]-[0084], fig. 1-6 DE 102018215917 A1 CN 113169658 A | |
| JP | 2010-93886 | A | 22 April 2010 | (Family: none) | |
| JP | 57-78361 | A | 17 May 1982 | (Family: none) | |

Form PCT/ISA/210 (patent family annex) (January 2015)